(19) **Europäisches Patentamt / European Patent Office / Office européen des brevets**

(11) **EP 4 589 865 A1**

(12) **EUROPEAN PATENT APPLICATION**
published in accordance with Art. 153(4) EPC

(43) Date of publication:
**23.07.2025 Bulletin 2025/30**

(21) Application number: **23870334.2**

(22) Date of filing: **13.09.2023**

(51) International Patent Classification (IPC):
**H04B 17/391** (2015.01)

(52) Cooperative Patent Classification (CPC):
**G06F 18/214; G06N 3/0442; G06N 3/045;
G06N 3/0464; G06N 3/0475; G06N 3/084;
G06N 3/09; G06N 3/094; H04B 17/391;
H04W 24/06**

(86) International application number:
**PCT/CN2023/118590**

(87) International publication number:
**WO 2024/067097 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 CN 202211202383**

(71) Applicant: **ZTE CORPORATION
Shenzhen, Guangdong 518057 (CN)**

(72) Inventors:
• **ZHOU, Xianwen
Shenzhen, Guangdong 518057 (CN)**

• **LIU, Qiaoyan
Shenzhen, Guangdong 518057 (CN)**
• **WANG, Kai
Shenzhen, Guangdong 518057 (CN)**
• **LI, Jianguo
Shenzhen, Guangdong 518057 (CN)**
• **WANG, Guoyan
Shenzhen, Guangdong 518057 (CN)**
• **ZHANG, Jinchao
Shenzhen, Guangdong 518057 (CN)**
• **PANG, Lei
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **MODEL TRAINING METHOD AND APPARATUS, CELL ANTENNA ADJUSTMENT METHOD AND APPARATUS, AND ELECTRONIC DEVICE**

(57)     The present application provides a model training method and apparatus, a cell antenna adjustment method and apparatus, and an electronic device. The model training method comprises: acquiring a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows; inputting the user distribution spatio-temporal sequence sample to a user distribution prediction model to obtain predicted user spatial distribution data of the target time window corresponding to the target cell; determining training loss of the user distribution prediction model on the basis of the user spatial distribution data of the target time window with which the user distribution spatio-temporal sequence sample is labeled, and the predicted user spatial distribution data of the target time window provided by the user distribution prediction model; and performing parameter adjustment on the user distribution prediction model on the basis of the training loss.

EP 4 589 865 A1

Acquire a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows

S102

Input the user distribution spatio-temporal sequence sample into a user distribution prediction model to obtain predicted user spatial distribution data of the target time window corresponding to the target cell

S104

Determine training loss of the user distribution prediction model on the basis of the user spatial distribution data of the target time window with which the user distribution spatio-temporal sequence sample is labeled, and the predicted user spatial distribution data of the target time window provided by the user distribution prediction model

S106

Perform parameter adjustment on the user distribution prediction model on the basis of the training loss

S108

FIG. 1

**Description**

CROSS-REFERENCE

This application claims priority to Chinese patent application No. 202211202383.1, filed to the CNIPA on September 29, 2022, entitled "Model Training Method and Apparatus, Cell Antenna Adjustment Method and Apparatus, and Electronic Device", the entire contents of which are incorporated herein by reference.

TECHNICAL FIELD

The present application relates to the technical field of artificial intelligence, in particular to a model training method and apparatus, a cell antenna adjustment method and apparatus, and an electronic device.

BACKGROUND

In the field of communication, network optimization is a main measure to improve the user's communication experience. User distribution is a very important reference index for network optimization. Here, taking cell optimization in a communication network as an example, if it can be predicted that the user distribution of a cell will change at a next moment, some parameters of the cell can be adaptively adjusted based on the predicted user distribution to cope with future changes.

Therefore, how to accurately predict future user distribution, and how to perform network optimization based on the predicted future user distribution are the technical problems that need to be solved urgently at present.

SUMMARY

An object of the present application is to provide a model training method and apparatus, a cell antenna adjustment method and apparatus, and an electronic device. Accurate prediction of future user distribution can be achieved based on historical user distribution of a cell, and a cell antenna can be adjusted according to the predicted future user distribution.

In order to achieve the above object, the embodiments of the present application are achieved as follows:

In a first aspect, provided is a model training method, including: acquiring a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows; inputting the user distribution spatio-temporal sequence sample into a user distribution prediction model to obtain predicted user spatial distribution data of the target time window corresponding to the target cell; and determining training loss of the user distribution prediction model on the basis of the user spatial distribution data of the target time window with which the user distribution spatio-temporal sequence sample is labeled, and the predicted user spatial distribution data of the target time window provided by the user distribution prediction model.

In a second aspect, provided is a cell antenna adjustment method, including: acquiring a user distribution spatio-temporal sequence associated with a future time window of a target cell, the user distribution spatio-temporal sequence consisting of user spatial distribution data of a plurality of continuous historical time windows; inputting the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows; determining a matching antenna adjustment strategy based on the predicted user spatial distribution data of the future time window corresponding to the target cell; and performing antenna adjustment on the target cell according to the antenna adjustment strategy in the future time window.

In a third aspect, provided is a model training apparatus, including: a training sample acquisition module, configured to acquire a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows; a training sample input module, configured to input the user distribution spatio-temporal sequence sample into a user distribution prediction model to obtain predicted user spatial distribution data of the target time window corresponding to the target cell; a training loss calculation module, configured to determine training loss of the user distribution prediction model on the basis of the user spatial distribution data of the target time window with which the user distribution spatio-temporal sequence sample is labeled, and the predicted user spatial distribution data of the target time window provided by the user distribution prediction model; and a training adjustment module, configured to perform parameter adjustment on the user distribution prediction model on the basis of the training loss.

In a fourth aspect, provided is a cell antenna adjustment apparatus, including: a prediction preparation module, configured to acquire a user distribution spatio-temporal sequence associated with a future time window of a target cell, the user distribution spatio-temporal sequence consisting of user spatial distribution data of a plurality of continuous historical time windows; a prediction execution module, configured to input the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows; a strategy determination module, configured to determine a matching antenna adjustment strategy based on the predicted user spatial distribution data of the future time window corresponding to the target cell; and a strategy execution module, configured to perform antenna adjustment on the target cell according to the antenna adjustment strategy in the future time window.

In a fifth aspect, an embodiment of the present application provides an electronic device, including: a processor; and a memory configured to store computer-executable instructions that, when executed, cause the processor to perform the method in the first aspect or the second aspect.

In a sixth aspect, provided is a computer-readable storage medium, configured to store computer-executable instructions which, when executed by a processor, implement the method in the first aspect or the second aspect.

BRIEF DESCRIPTION OF DRAWING(S)

In order to more clearly illustrate the technical solutions in the embodiments of the present application or the prior art, the drawings required to be used in the description of the embodiments or the prior art are simply introduced below. Obviously, the drawings in the following description are only some embodiments described in the embodiments of the present application, and for those of ordinary skill in the art, other drawings can also be obtained according to these drawings without inventive steps.

 FIG. 1 is a first schematic flowchart of a model training method according to an embodiment of the present application.
 FIG. 2 is a schematic structural diagram of a long short-term memory network.

 FIG. 3 is a schematic structural diagram of an adversarial network.
 FIG. 4 is a schematic diagram of target cell gridding according to an embodiment of the present application.
 FIG. 5 is a schematic diagram of determining a user distribution spatio-temporal sequence by a sliding window method according to an embodiment of the present application.
 FIG. 6 is a schematic diagram of predicting user distribution spatio-temporal data by a ConvLSTM model according to an embodiment of the present application.
 FIG. 7 is a schematic flowchart of cell antenna adjustment according to an embodiment of the present application.
 FIG. 8 is a schematic structural diagram of a model training apparatus according to an embodiment of the present application.
 FIG. 9 is a schematic diagram of a final structure of cell antenna adjustment according to an embodiment of the present application.
 FIG. 10 is a schematic structural diagram of an electronic device according to an embodiment of the present application.

DETAILED DESCRIPTION

In order to make those skilled in the art better understand the technical solutions in this disclosure, the technical solutions in the embodiments of the present application will be clearly and completely described below in conjunction with the accompanying drawings in the embodiments of the present application. Obviously, the described embodiments are only part of the embodiments of this disclosure, rather than all of the embodiments. Based on the embodiments in this disclosure, all other embodiments obtained by those of ordinary skill in the art without making inventive step should belong to the scope of protection of this disclosure.

As previously mentioned, user distribution is a very important reference index for network optimization. For example, in a cell optimization scenario, when it is predicted that the user distribution of a cell will change at a next moment, some parameters in the cell can be adaptively adjusted according to the predicted user distribution to improve the user's communication experience. Therefore, how to achieve accurate prediction of future user distribution, and how to perform network optimization based on the predicted future user distribution is the technical problems to be solved by the present application.

In particular, in one aspect, an embodiment of the present application provides a model training solution. A model for predicting the user distribution of cells in a communication network, that is, a user distribution prediction model, can be trained by a deep learning technology based on artificial intelligence. In another aspect, an embodiment of the present application provides a cell antenna adjustment solution based on the trained user distribution prediction model. The parameters of a cell antenna can be adjusted based on a future user distribution of a cell predicted by the user distribution prediction model, so that the coverage of the cell antenna can adapt to the change of the future user distribution.

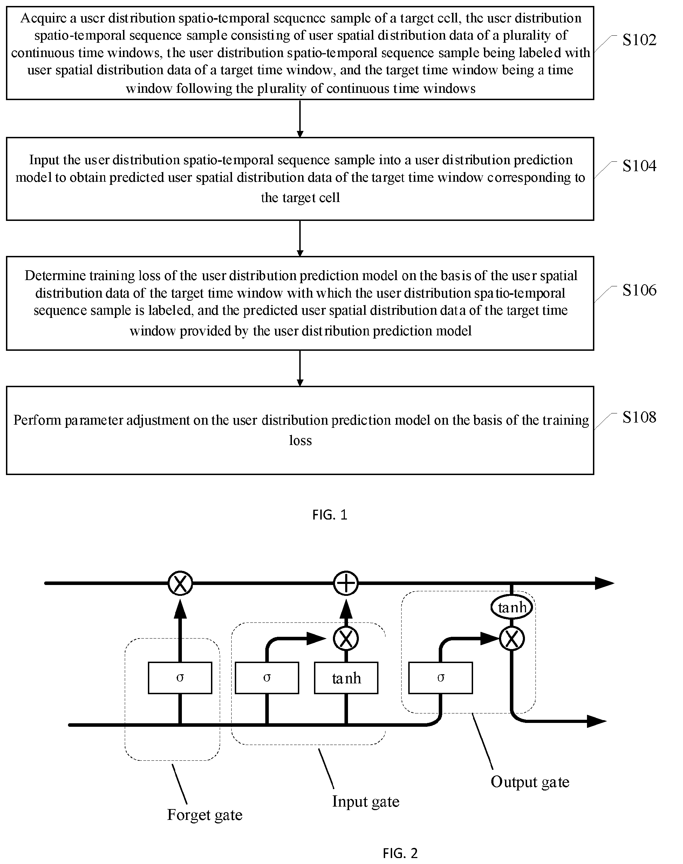

Referring to FIG. 1, FIG. 1 is a schematic flowchart of a model training method according to an embodiment of the present application, specifically including the following steps:
S102: a user distribution spatio-temporal sequence sample of a target cell is acquired, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows.

In this embodiment, the user distribution prediction model is trained in a supervised manner. The user distribution spatio-temporal sequence sample is used as a training sample of the user distribution prediction model.

It should be understood that a spatio-temporal sequence refers to characteristic information presented in both spatial and temporal dimensions.

The user spatial distribution data described in this step is the user distribution presented in a spatial dimension. In the field of communication, a measurement report (MR) is information transmitted upstream by a user terminal and contains angle measurement information of the user terminal, such as a horizontal direction of arrival (Hdoa) and a vertical direction of arrival (Vdoa). Through Hdoa and Vdoa in the measurement report, geographical location information of the user terminal can be determined. To this end, in this embodiment, the user distribution may be determined in the spatial dimension based on a measurement report of the target cell. For example, the target cell is gridded to construct a grid map of the target cell to determine geographical location information of each grid. When a set of measurement reports for the plurality of continuous time windows corresponding to the target cell is collected, the set of measurement reports is mapped to grids which are matched with geographical locations in the target cell according to the geographical location information (Hdoa and Vdoa) in the measurement reports to obtain a distribution of the measurement reports for the plurality of continuous time windows corresponding to the target cell. Thereafter, user spatial distribution data of each time window corresponding to the target cell is determined in the mapped grid map with a time window as a granularity in a time dimension. The user spatial distribution data may be, but is not limited to, grid matrix data of user distribution. Data for each grid in a grid matrix is a proportion of measurement reports corresponding to the grid. That is, the more measurement reports mapped to the grid, the higher the proportion of the measurement reports, the greater the density of the corresponding user distribution; otherwise, the fewer measurement reports mapped to the grid, the lower the proportion of the measurement reports, and the smaller the density of the corresponding user distribution. It can be seen that the user spatial distribution data can accurately reflect the distribution of user terminals (representatives) in various grids in the cell.

In this embodiment, the user spatial distribution data of the plurality of continuous time windows are combined in a time sequence, i.e., the user distribution spatio-temporal sequence sample of the target cell can be obtained in combination with the time dimension.

For this embodiment, a principle of the user distribution prediction model is to predict user distribution data of a certain future time window based on the user distribution spatio-temporal sequence sample. E.g., with days as a unit of time window, assuming that the user distribution prediction model is used to predict user distribution data on one day in the future, user distribution data on last 7 days can be combined into the user distribution spatio-temporal sequence sample to train the user distribution prediction model such that the user distribution prediction model can predict the user distribution data on one day in the future based on user distribution data on a last week.

Correspondingly, under a supervised training mode, in this embodiment, the user spatial distribution data of the target time window that needs to be predicted corresponding to the user distribution spatio-temporal sequence sample is used as a label to label the user distribution spatio-temporal sequence sample. For example, the user distribution spatio-temporal sequence sample is composed of user spatial distribution data on a week of 7 days from August 22 to August 28, and assuming that the user distribution prediction model is used to predict user distribution data on one day in the future, user spatial distribution data on August 29 is used as a label to label the user distribution spatio-temporal sequence sample; in another example, the user distribution spatio-temporal sequence sample is composed of user spatial distribution data on a week of 7 days from August 22 to August 28, and assuming that the user distribution prediction model is used to predict user distribution data on a first day in the future, user spatial distribution data on August 30 is used as a label to label the user distribution spatio-temporal sequence sample.

It should be understood that the label with which the user distribution spatio-temporal sequence sample is labeled serves as an expected output of the user distribution prediction model. A principle of supervised training is to input the user distribution spatio-temporal sequence sample into the user distribution prediction model to obtain a prediction result of the user distribution prediction model, and compare a training result with the label with which the user distribution spatio-temporal sequence sample is labeled to subject the user distribution prediction model to multiple rounds of iterative parameter adjustments, so that the prediction result of the user distribution prediction model gradually approaches the user spatial distribution data of the target time window for labeling as the label to form a prediction ability.

S104: the user distribution spatio-temporal sequence sample is input into the user distribution prediction model to obtain predicted user spatial distribution data of the target time window corresponding to the target cell.

The user distribution prediction model in this embodiment is specifically a spatio-temporal sequence model, such as a convolutional long short-term memory (ConvLSTM) model, an adversarial network-long short-term memory (GAN-LSTM) model, and the like, and the user distribution prediction model is not specifically defined herein.

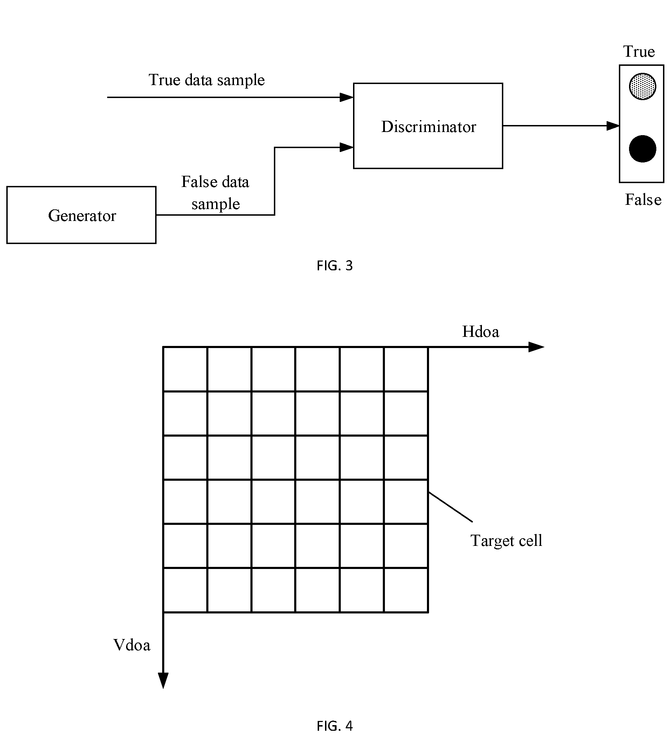

The ConvLSTM model is taken as an example. The ConvLSTM model is a combination of a convolutional neural network (CNN) and a long short-term memory (LSTM) network. The CNN mainly includes a convolution layer, a pooling layer and a fully-connected layer. Feature coding of a user distribution spatio-temporal sequence can be realized in a spatial dimension by performing convolution, pooling, and calculation of the fully connected layer on the user distribution spatio-temporal sequence, thereby extracting spatial features from the user distribution spatio-temporal sequence. As shown in FIG. 2, a main structure of the LSTM includes a forget gate, an input gate, and an output gate. Where $\sigma$ represents a sigmoid function, which is used to compress input data to a value of 0 or 1, 0 representing that information cannot pass, 1 representing that information can pass; and tanh represents a hyperbolic tangent function, which is used to perform hyperbolic tangent on input data. The function of the forget gate is to control a memory unit, determine how much the state at a historical moment is retained until a current moment, and implement a forget part by the sigmoid function. The input gate determines which information will be saved at the current moment, and also implements information storage through the sigmoid function. The output gate determines output state information. The LSTM can realize feature coding of the user distributtion spatio-temporal sequence in the time dimension, thereby extracting temporal features (also referred to as time series features) from the user distributtion spatio-temporal sequence. Through the combination of CNN and LSTM, the ConvLSTM model can capture spatio-temporal features in the user distribution spatio-temporal sequence, thereby predicting the user distribution data of the target time window based on the spatio-temporal features in the user distribution spatio-temporal sequence.

The GAN-LSTM model is taken as an example. GAN-LSTM is a combination of an adversarial network (GAN) and the LSTM. As shown in FIG. 3, the GAN mainly includes a generator and a discriminator. The generator outputs a false data sample. The false data sample and a true data sample are subjected to feature coding in the spatial dimension to be input into the discriminator. The discriminator determines which data sample is true and which data sample is false. By adjusting the feature coding capability of the GAN, the GAN can have the feature coding capability in the spatial dimension when the discriminator cannot determine which data sample is true and which data sample is false, so that the spatial features in the user distribution spatio-temporal sequence can be extracted. Similarly, the GAN-LSTM model can also capture spatio-temporal features in the user distribution spatio-temporal sequence through the combination of GAN and LSTM, thereby predicting the user distribution data of the target time window based on the spatio-temporal features in the user distribution spatio-temporal sequence.

It should be understood that in this step, the user distribution spatio-temporal sequence sample is input into the user distribution prediction model, and the resulting predicted user spatial distribution data is the training result of the user distribution prediction model.

S106: training loss of the user distribution prediction model is determined on the basis of the user spatial distribution data of the target time window with which the user distribution spatio-temporal sequence sample is labeled, and the predicted user spatial distribution data of the target time window provided by the user distribution prediction model; and

As previously described, the user spatial distribution data of the target time window with which the user distribution spatio-temporal sequence sample is labeled is a label of the user distribution spatio-temporal sequence sample, and is used as an expected output of the user distribution prediction model.

The training loss of the user distribution prediction model refers to an error between the predicted user spatial distribution data provided by the user distribution prediction model and the user spatial distribution data of the target time window for labeling as the label. Obviously, the smaller the error, the more accurate the prediction of the user distribution prediction model.

It should be understood that calculating the training loss of the user distribution prediction model in this step is to further determine a parameter adjustment direction of the user distribution prediction model, thereby enabling the predicted user spatial distribution data provided by the user distribution prediction model to gradually coincide with the label.

In practical applications, in this embodiment, a cross-entropy loss function for binary classification can be constructed in advance, and the training loss of the user distribution prediction model is obtained directly by inputting the user spatial distribution data of the target time window with which the user distribution spatio-temporal sequence sample is labeled, and the predicted user spatial distribution data of the target time window provided by the user distribution prediction model into the cross-entropy loss function. It should be noted that a loss function for calculating the training loss is not unique, which is not particularly limited herein.

S108: parameter adjustment is performed on the user distribution prediction model on the basis of the training loss.

Specifically, in this step, the dimension of reducing the training loss is a gradient direction, and parameter adjustment is performed on the user distribution prediction model so that the predicted user spatial distribution data of the target time window output by the user distribution prediction model gradually approaches the user spatial distribution data of the target time window for labeling as the label.

The above process of performing parameter adjustment on the user distribution prediction model is supervised training. When the training converges to a certain degree, for example, the predicted user spatial distribution data of the target time window output by the user distribution prediction model no longer changes or changes less than expected, it indicates the end of the training.

It should be understood that in this embodiment, the user distribution prediction model is trained by using a training set constructed by the user distribution spatio-temporal sequence samples, and ultimately, the user distribution prediction model can exhibit higher prediction accuracy on the training set. However, in actual application, the user distribution prediction model does not necessarily have high prediction accuracy.

To this end, user distribution spatio-temporal sequence samples different from those in the training set can be further used as a prediction set to evaluate the performance of the user distribution prediction model. That is, the user distribution spatio-temporal sequence samples in the prediction set are input into the user distribution prediction model for prediction, if the user distribution prediction model can also exhibit higher prediction accuracy in the prediction set, it indicates that training of the user distribution prediction model is successfully completed; otherwise, if the user distribution prediction model cannot exhibit higher prediction accuracy in the prediction set, the user distribution spatio-temporal sequence samples in the training set can be adjusted, for example, referencing a new user distribution spatio-temporal sequence sample in the training set, deleting user distribution spatio-temporal sequence samples with lower prediction accuracy in the training set, re-labeling the user distribution spatio-temporal sequence samples in the training set, and the like. Afterwards, the user distribution prediction model is re-trained by the adjusted training set, and the performance of the user distribution prediction model is then evaluated by using the test set, until after the user distribution prediction model can also exhibit higher prediction accuracy in the prediction set, the whole training process is ended.

Based on the above, it can be seen that in the model training method in the embodiment of the present application, the user spatial distribution data of the plurality of continuous time windows of the target cell is combined into the user distribution spatio-temporal sequence sample, and the user distribution spatio-temporal sequence sample is labeled with the user spatial distribution data of the target time window following the plurality of continuous time windows as a label, thereby training the user distribution prediction model based on the labeled user distribution spatio-temporal sequence sample. The training process is supervised by the user spatial distribution data of the target time window for labeling as the label, and parameter adjustment is performed on the user distribution prediction model, so that the predicted user spatial distribution data output by the user distribution prediction model gradually approaches the user spatial distribution data of the target time window for labeling as the label. Since the target time window belongs to a future time window with respect to the user distribution spatio-temporal sequence sample, the user distribution prediction model trained by the model training method in the embodiment of the present application can finally predict user spatial distribution data of the future time window based on a user distribution spatio-temporal sequence composed of user spatial distribution data of a plurality of continuous historical time windows, thereby providing data support for cell antenna adjustment to cope with changes in future user distribution.

The model training method in the embodiment of the present application is described below in detail in connection with one application scenario.

The model training method in this application scenario includes the following phases:

Phase 1: Data collection and data pre-processing.

Data preparation is to collect measurement report data in the CollectDataTime from a gateway, a network element or a data service module of the target cell with a time granularity of CollectDataStep (default unit/min). The collected data includes, but is not limited to, timestamp information (year/month/day/hour/minute) of measurement reports, the number of Radio Resource Control (RRC) connected users, the number of active users, HDoA/VDoA spatial information, etc. It should be understood that CollectDataStep and CollectDataTime may be set as needed, and are not specifically limited herein.

Thereafter, referring to FIG. 4, the target cell is gridded with Hdoa as a horizontal axis and Vdoa as a vertical axis. Each grid has an Hdoa ranging from -60 degrees to 60 degrees (HorizontalBeamGridSpace) and a Vdoa ranging from -20 degrees to 20 degrees (Vertical BeamGridSpace).

After the grid map of the target cell is obtained, based on the collected measurement report data, the measurement reports are mapped to a grid map shown in FIG. 4, and a proportion of measurement reports in each grid is counted, so that portrait information of user distribution in the cell, i.e., the grid matrix data described above, can be obtained.

Thereafter, the time window is set according to the requirements, for example, with days as a unit of the time window, the grids to which the measurement reports are mapped in FIG. 4 are subdivided by the time windows to obtain grid matrix data on a plurality of consecutive days. Here, in this application scenario, grid matrix data on 7 consecutive days (one week) is combined to obtain one user distribution spatio-temporal sequence sample.

Phase 2: Model construction and training.

In this application scenario, the ConvLSTM model is used as the user distribution prediction model.

First, a dataset of the ConvLSTM model is collected.

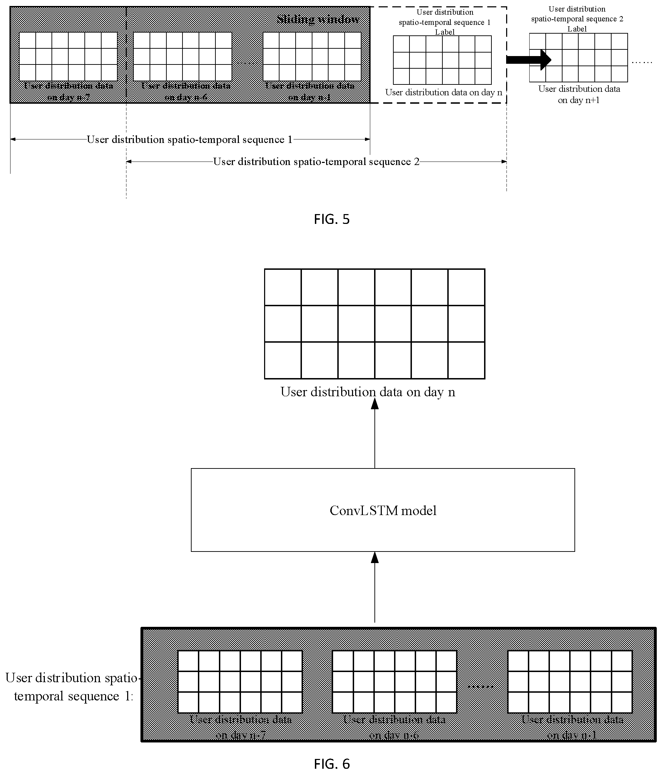

In this application scenario, the dataset of the ConvLSTM model can be acquired by a sliding window method. Referring to the schematic diagram of the sliding window method shown in FIG. 5, since a user distribution spatio-temporal sequence sample is composed of user distribution data of 7 consecutive "day" time windows in this application scenario, a sliding window having a length of 7 time windows can be constructed. The sliding window slides in a future direction with "days" as a step size. Each time the sliding window slides, user distribution data on 7 consecutive days covered by the sliding window can be regarded as a user distribution spatio-temporal sequence sample.

For example, user distribution data on day n-7 to user distribution data on day n-1 constitute a user distribution spatio-temporal sequence sample 1 before sliding the sliding window in FIG. 5; and after sliding once, user distribution data on day n-6 to user distribution data on day n constitute a user distribution spatio-temporal sequence sample 2.

Further reference is made here to FIG. 6. Assuming that the ConvLSTM model in this application scenario is used to predict user distribution data on one day in the future, after the user distribution spatio-temporal sequence sample 1 in FIG. 5 is input into the ConvLSTM model, the ConvLSTM model should output the user distribution data on day n (i.e., predicted user distribution data). To this end, user distribution data on day n of a true value needs to be taken as a label of the user distribution spatio-temporal sequence sample 1. Similarly, for the user distribution spatio-temporal sequence sample 2 in FIG. 5, user distribution data on day n+1 of the true value should be taken as a label of the user distribution spatio-temporal sequence sample 2.

After collection of the dataset of the ConvLSTM model is completed, sampling is performed according to a certain proportion to construct a training set train_set and a prediction set test_set. For example, if a ratio of samples in the train_set to samples in the test_set is set to be 8:2, 8 out of every 10 sampled user distribution spatio-temporal sequence samples are selected as the train_set and the remaining 2 sampled user distribution spatio-temporal sequence samples are selected as the test_set.

At the same time, training parameters of the ConvLSTM model are set.

Here is a brief example for introduction. CNN parameters of the ConvLSTM model are configured as follows:

filters: the number of convolution kernels in a convolutional neural network is configured to be 30 by default, and the convolution kernels are mainly configured to extract local spatial feature information.
kernel_size: a convolution kernel size, kernel_size= (3, 3).
strides: (1,1) is a stride of convolution, i.e., the convolution kernels move right and down by a few grids at a time, and the default stride is 1.
padding: zero padding, commonly referred to as "valid" or "same", and the default is "same".
activation: an activation function, common activation functions including sigmoid, tanh, Relu, and the like, and the default is the sigmoid function.

The model training related parameters are configured as follows:

BatchSize: i.e., the number of samples trained per batch, which is 10 by default.
Epoch: the default is 100 times.
Optimizer: configured to determine a convergence method of a gradient descent of a loss function for the model, which is adadelta by default.
Loss function: using binary cross entropy.

After the training parameters are set, the ConvLSTM model can be iteratively trained by using the train_set. After iterative training for BatchSize/Epoch times is completed, the test_set is used to evaluate the performance of the ConvLSTM model. If the performance meets the application requirements, the training is ended; otherwise, resampling is performed to construct the train_set, and the ConvLSTM model is re-iteratively trained according to the above training parameters until the ConvLSTM model passes evaluation of the test_set.

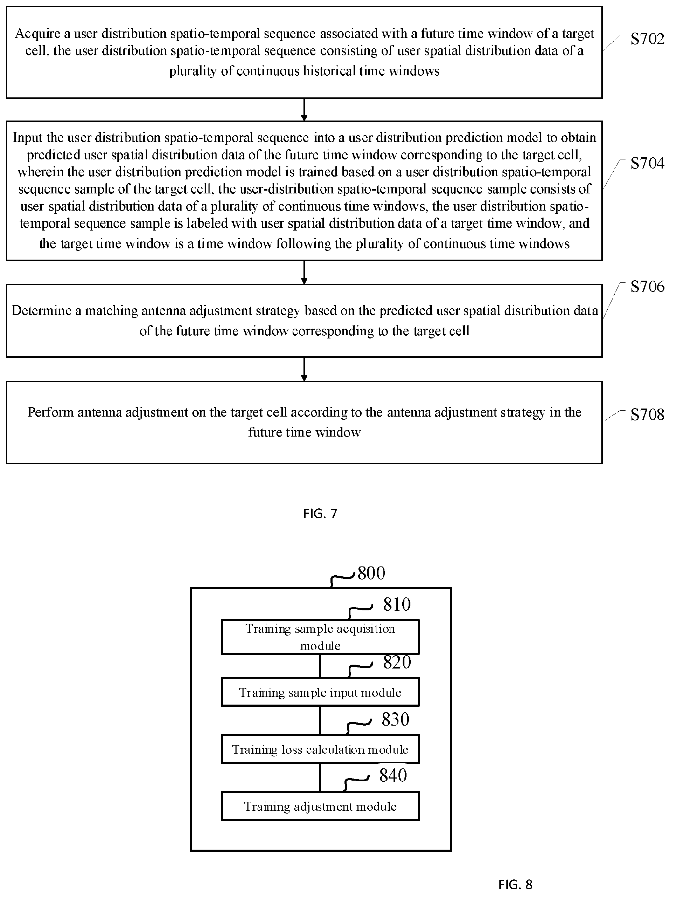

Correspondingly, FIG. 7 is a schematic flowchart of a cell antenna adjustment method according to an embodiment of the present application, specifically including the following steps:

S702: a user distribution spatio-temporal sequence associated with a future time window of a target cell is acquired, the user distribution spatio-temporal sequence consisting of user spatial distribution data of a plurality of continuous historical time windows.

In this embodiment, the target cell is a cell requiring antenna adjustment, and the plurality of continuous historical time windows are determined based on the sliding window method described above that is matched with the number of time windows. Optionally, a last time window of the plurality of continuous historical time windows is a time window closest to a current time, that is, in this embodiment, the user distribution spatio-temporal sequence is generated based on the plurality of continuous historical time windows that are currently most recent.

S704: the user distribution spatio-temporal sequence is input into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows.

The predicted user spatial distribution data obtained in this step may be the grid matrix data described above, i.e., the measurement reports mapped to the grids in the target cell that can be predicted by the user distribution prediction model. Since the measurement reports are uploaded by a user terminal device, the predicted grid matrix data can accurately reflect the user distribution in the target cell, thereby providing data support for subsequent antenna adjustment.

S706: a matching antenna adjustment strategy is determined based on the predicted user spatial distribution data of the future time window corresponding to the target cell.

The antenna adjustment strategy in this embodiment may refer to, but is not limited to, adjusting a coverage weight, an output power, a transmission angle, etc. of a target cell antenna, which determines the signal strength projected by the target cell antenna on each grid. For the corresponding application, the adjustment aims at controlling the target cell antenna to project high-intensity signals to grids having a higher user distribution density and low-intensity signals to grids having a lower user distribution density, thereby providing high-quality communication services for users in the target cell under limited resources.

In particular, in this embodiment, whether the user distribution in the future time is significantly changed relative to the current time may also be analyzed based on the predicted user spatial distribution data. If the change is large, the matching antenna adjustment strategy is determined based on the predicted user spatial distribution data; if the change is small (the user distribution changes within the normal fluctuation range), a prediction of user spatial distribution data may be awaited for a next future time window before determining whether an antenna adjustment strategy is required.

As an exemplary introduction, in this embodiment, a last historical time window corresponding to the future time window may be taken as a reference time window, and a change in user distribution of the target cell is determined according to user spatial distribution data of the reference time window corresponding to the target cell and the predicted user spatial distribution data of the future time window corresponding to the target cell. For example, the user spatial distribution data of the reference time window corresponding to the target cell and the predicted user spatial distribution data of the future time window corresponding to the target cell are subjected to feature vector coding to obtain a first feature vector of the reference time window corresponding to the target cell and a second feature vector of the future time window corresponding to the target cell; and the change in user distribution of the target cell is then determined based on a cosine distance between the first feature vector and the second feature vector. If the cosine distance is small (lower than a preset distance threshold), it indicates that the user distribution of the future time window has little change relative to the reference time window; otherwise, if the cosine distance is larger (reaching the preset distance threshold), it indicates the user distribution of the future time window changes greatly relative to the reference time window.

S708: antenna adjustment is performed on the target cell according to the antenna adjustment strategy in the future time window.

According to the cell antenna adjustment method in this embodiment, the user spatial distribution data of the plurality of continuous time windows of the cell is combined into the user distribution spatio-temporal sequence sample, and the user distribution spatio-temporal sequence sample is labeled with the user spatial distribution data of the target time window following the plurality of continuous time windows as a label, thereby training the user distribution prediction model based on the labeled user distribution spatio-temporal sequence sample. The training process is supervised by the user spatial distribution data of the target time window for labeling as the label, and parameter adjustment is performed on the user distribution prediction model, so that the predicted user spatial distribution data output by the user distribution prediction model gradually approaches the user spatial distribution data of the target time window for labeling as the label. Since the target time window belongs to a future time window with respect to the user distribution spatio-temporal sequence sample, the trained user distribution prediction model can finally predict the user spatial distribution data of the future time window based on the user distribution spatio-temporal sequence composed of the user spatial distribution data of the plurality of continuous historical time windows, so that the adjustment strategy of the cell antenna is planned in advance, eventually enabling the coverage of the cell antenna to adapt to changes in future user distribution.

The cell antenna adjustment method in this embodiment is described below in detail in connection with one application scenario.

This application scenario is used to adjust a weight of a 5th-Generation Mobile Communication Technology (5G) network smart antenna of the target cell. To this end, a radio frequency fingerprint library in which an antenna weight corresponds to the user distribution may be constructed in advance. For example, for different user distribution scenarios such as tall buildings and shopping malls in the target cell, typical user distribution scenarios and their corresponding best matching antenna weights are constructed in advance, thereby generating the radio frequency fingerprint library. When it is predicted that the user distribution of the communication network will change, coverage weights in the radio frequency fingerprint library can be adaptively matched based on predicted user distribution information, so as to achieve adaptive and intelligent adjustment of the antenna weights and further improve the coverage performance of the 5G network.

The corresponding process includes the following steps:

Data collection and data pre-processing.

Measurement report data in the CollectData-Time which is equal to one month (default unit/day) is collected from a gateway, a network element or a data service module with a time granularity of CollectDataStep (default unit/min), and the collected data includes, but is not limited to, timestamp information (year/month/day/-hour/minute) of measurement reports, the number of RRC connected users, the number of active users, HDoA/VDoA spatial information, etc.

The target cell is then gridded. Each grid has an Hdoa ranging from -60 degrees to 60 degrees (HorizontalBeamGridSpace) and a Vdoa ranging from -20 degrees to 20 degrees (Vertical BeamGridSpace).

After the grid map of the target cell is obtained, the measurement reports are mapped to the grid map according to the collected measurement report data, and a proportion of measurement reports in each grid is counted, so that user distribution spatio-temporal data of the target cell can be obtained.

Assuming that in this application scenario, user distribution spatio-temporal data on day n is predicted based on user distribution spatio-temporal data on a week of 7 days from day n-7 to day n-1, the user distribution spatio-temporal data on a week of 7 days from day n-7 to day n-1 constitutes a user distribution spatio-temporal sequence, and the user distribution spatio-temporal sequence is input into the user distribution prediction model, and predicted user distribution spatio-temporal data on day n is output by the user distribution prediction model.

Afterwards, if it is found that there is a large difference between the user distribution spatio-temporal data on day n and the user distribution spatio-temporal data on day n-1, an antenna coverage weight in the radio frequency fingerprint library is adaptively matched according to the user distribution spatio-temporal data on day n, so that the antenna coverage weight can be adaptively adjusted according to the change of user distribution, further improving the coverage performance of the 5G network.

Determining the difference between the user distribution spatio-temporal data on day n and the user distribution spatio-temporal data on day n-1 is realized by a correlation algorithm based on the cosine distance.

That is, the user distribution spatio-temporal data on day n and the user distribution spatio-temporal data on day n-1 (two-dimensional grid matrix data) are subjected to feature coding with a reduced dimension to obtain a one-dimensional feature vector X on day n and a one-dimensional feature vector Y on day n-1.

The correlation between the user distribution spatio-temporal data on day n and the user distribution spatio-temporal data on day n-1 is then calculated based

on a formula: $\dfrac{X^T Y}{\|X\| * \|Y\|}$. Here, a correlation threshold CorrThr is set, and when the calculated correlation is lower than CorrThr, it is considered that there is a difference in user distribution, otherwise, it is considered that the user distribution is similar.

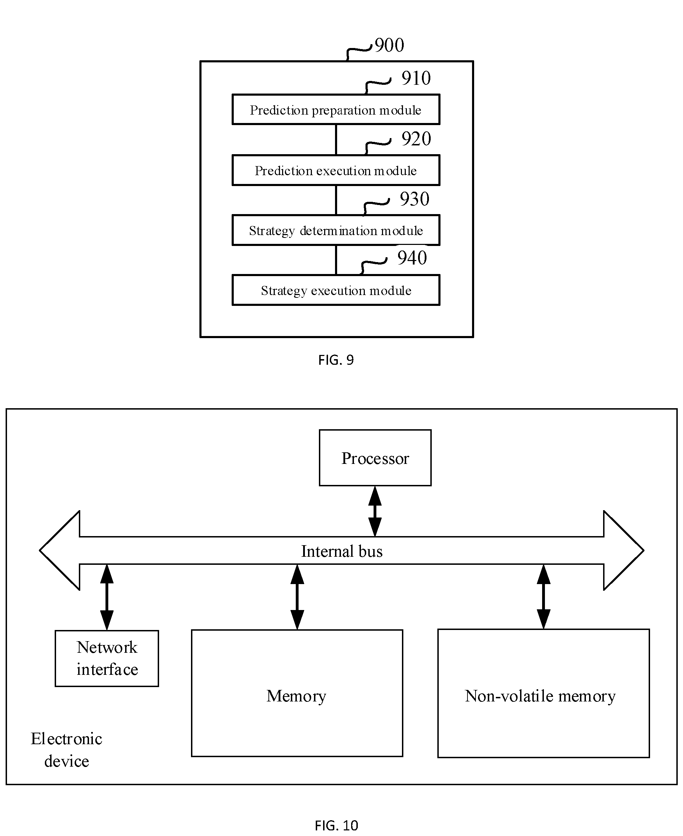

In addition, an embodiment of the present application further provides a model training apparatus. FIG. 8 is a schematic structural diagram of a model training apparatus 800, including:

a training sample acquisition module 810, configured to acquire a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows;

a training sample input module 820, configured to input the user distribution spatio-temporal sequence sample into a user distribution prediction model to obtain predicted user spatial distribution data of the target time window corresponding to the target cell;

a training loss calculation module 830, configured to determine training loss of the user distribution prediction model on the basis of the user spatial distribution data of the target time window with which the user distribution spatio-temporal sequence sample is labeled, and the predicted user spatial distribution data of the target time window provided by the user distribution prediction model; and

a training adjustment module 840, configured to perform parameter adjustment on the user distribution prediction model on the basis of the training loss.

According to the model training apparatus in the embodiment of the present application, the user spatial distribution data of the plurality of continuous time windows of the target cell is combined into the user distribution spatio-temporal sequence sample, and the user distribution spatio-temporal sequence sample is labeled with the user spatial distribution data of the target time window following the plurality of continuous time windows as a label, thereby training the user distribution prediction model based on the labeled user distribution spatio-temporal sequence sample. The training process is supervised by the user spatial distribution data of the target time window for labeling as the label, and parameter adjustment is performed on the user distribution prediction model, so that the predicted user spatial distribution data output by the user distribution prediction model gradually approaches the user spatial distribution data of the target time window for labeling as the label. Since the target time window belongs to a future time window with respect to the user distribution spatio-temporal sequence sample, the user distribution prediction model trained by the model training method in the embodiment of the present application can finally predict user spatial distribution data of the future time window based on a user distribution spatio-temporal sequence composed of user spatial distribution data of a plurality of continuous historical time windows, thereby providing data support for cell antenna adjustment to cope with changes in future user distribution.

Optionally, the training sample acquisition module 810 is specifically configured to: acquire a set of measurement reports for the plurality of continuous time windows corresponding to the target cell; grid the target cell to determine geographical location information of each grid in the target cell; map the set of measurement reports to grids which are matched with geographical locations in the target cell according to the geographical location information in the measurement reports to obtain a distribution of the measurement reports for the plurality of continuous time windows corresponding to the target cell; and determine user spatial distribution data of each time window corresponding to the target cell based on a distribution of a measurement report for each of the plurality of continuous time windows corresponding to the target cell, and combine the user spatial distribution data of each time window in a time sequence to obtain the user distribution spatio-temporal sequence sample of the target cell.

Optionally, the user distribution prediction model is a convolutional long short-term memory (ConvLSTM) model or a generative adversarial network-long short-term memory (GAN-LSTM) model.

Optionally, the training loss calculation module 830 is specifically configured to: input the user spatial distribution data of the target time window with which the user distribution spatio-temporal sequence sample is labeled, and the predicted user spatial distribution data of the target time window provided by the user distribution prediction model into a cross-entropy loss function for binary classification to calculate the training loss of the user distribution prediction model.

Obviously, the model training apparatus shown in FIG. 8 can be used as an execution subject of the method shown in FIG. 1, and thus can implement the steps and corresponding functions of the method shown in FIG. 1. Since the principle is the same, detailed description will not be repeated here.

In addition, an embodiment of the present application further provides a cell antenna adjustment apparatus. FIG. 9 is a schematic structural diagram of a cell antenna adjustment apparatus 900, including:

a prediction preparation module 910, configured to acquire a user distribution spatio-temporal sequence associated with a future time window of a target cell, the user distribution spatio-temporal sequence consisting of user spatial distribution data of a plurality of continuous historical time windows;
a prediction execution module 920, configured to input the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows;
a strategy determination module 930, configured to determine a matching antenna adjustment strategy based on the predicted user spatial distribution data of the future time window corresponding to the target cell; and
a strategy execution module 940, configured to perform antenna adjustment on the target cell according to the antenna adjustment strategy in the future time window.

Optionally, the strategy determination module 930 is specifically configured to: acquire user spatial distribution data of a reference time window corresponding to the target cell, the reference time window being a last historical time window of the future time window; determine a change in user distribution of the target cell based on the user spatial distribution data of the reference time window corresponding to the target cell and the predicted user spatial distribution data of the future time window corresponding to the target cell; and determine a matching antenna adjustment strategy based on the predicted user spatial distribution data of the future time window corresponding to the target cell if the change in user distribution of the target cell reaches a preset change standard.

The strategy determination module 930 may perform feature vector coding on the user spatial distribution data of the reference time window corresponding to the target cell and the predicted user spatial distribution data of the future time window corresponding to the target cell to obtain a first feature vector of the reference time window corresponding to the target cell and a second feature vector of the future time window corresponding to the target cell; and determine the change in user distribution of the target cell based on a cosine distance between the first feature vector and the second feature vector.

Optionally, the plurality of continuous historical time windows are determined based on a sliding window method matched with the number of time windows, and a last time window of the plurality of continuous historical time windows is a time window closest to a current time.

Obviously, the cell antenna adjustment apparatus shown in FIG. 9 can be used as an execution subject of the method shown in FIG. 7, and thus can implement the steps and corresponding functions of the method shown in FIG. 7. Since the principle is the same, detailed description will not be repeated here.

FIG. 10 is a schematic structural diagram of an electronic device according to an embodiment of this disclosure. Referring to FIG. 10, at a hardware level, the electronic device includes a processor, and optionally also includes an internal bus, a network interface, and a memory. The memory may include an internal storage, such as a high-speed Random-Access Memory (RAM), and may also include a non-volatile memory, such as at least one disk memory, or the like. Of course, the electronic device may also include hardware required for other services.

The processor, the network interface, and the memory may be interconnected by the internal bus, which may be an ISA (Industry Standard Architecture) bus, a PCI (Peripheral Component Interconnect) bus, or an EISA (Extended Industry Standard Architecture) bus, or the like. The bus may be divided into an address bus, a data bus, a control bus, and the like. For ease of illustration, only one bi-directional arrow is shown in FIG. 10, but does not indicate only one bus or one type of bus.

The memory is configured to store a program. Specifically, the program may include program codes including computer operation instructions. The memory may include an internal storage and a non-volatile storage memory, and provides instructions and data to the processor.

Optionally, the processor reads the corresponding computer program from the non-volatile memory into the internal storage and then runs the corresponding computer program, forming the model training apparatus shown in FIG. 8 above at a logical level. Correspondingly, the processor executes the program stored in the memory and is specifically configured to:

acquire a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows;
input the user distribution spatio-temporal sequence sample into a user distribution prediction model to obtain predicted user spatial distribution data of the target time window corresponding to the target cell; determine training loss of the user distribution prediction model on the basis of the user spatial distribution data of the target time window with which the user distribution spatio-temporal sequence sample is labeled, and the predicted user spatial distribution data of the target time window provided by the user distribution prediction model; and
perform parameter adjustment on the user distribution prediction model on the basis of the training loss.

Or, the processor reads the corresponding computer program from the non-volatile memory into the internal storage and then runs the corresponding computer program, forming the cell antenna adjustment apparatus shown in FIG. 9 above at a logical level. Correspondingly, the processor executes the program stored in the memory and is specifically configured to:

acquire a user distribution spatio-temporal sequence associated with a future time window of a target cell, the user distribution spatio-temporal sequence consisting of user spatial distribution data of a plurality of continuous historical time windows;
input the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows;
determine a matching antenna adjustment strategy based on the predicted user spatial distribution data of the future time window corresponding to the target cell; and
perform antenna adjustment on the target cell according to the antenna adjustment strategy in the future time window.

The model training method or the cell antenna adjustment method disclosed in the embodiments shown in this disclosure may be applied to and implemented by the processor. The processor may be an integrated circuit chip having signal processing capabilities. In implementation, the steps of the method described above may be performed by an integrated logic circuit in hardware or by instructions in the form of software in the processor. The processor described above may be a general-purpose processor, including a Central Processing Unit (CPU), a Network Processor (NP), and the like; and may also be a Digital Signal Processor (DSP), an Application Specific Integrated Circuit (ASIC), a Field-Programmable Gate Array (FPGA) or other programmable logic devices, a discrete gate or a transistor logic device, or a discrete hardware component. The methods, steps, and logic block diagrams disclosed in the embodiments of the present application may be implemented or performed. The general-purpose processor may be a microprocessor or any conventional processor or the like. The steps of the methods disclosed in connection with the embodiments of the present application may be directly embodied as being performed by a hardware decoding processor, or a combination of a hardware module and a software module in the decoding processor. The software module may be located in a storage medium well known in the art, such as a random access memory, a flash memory, a read-only memory, a programmable read-only memory, or an electrically erasable programmable memory, and a register. The storage medium is located in the memory, and the processor reads information in the memory and performs the steps of the methods described above in conjunction with its hardware.

Of course, in addition to software implementation, the electronic device in this disclosure does not exclude other implementations, such as a logic device or a combination of software and hardware, and the like, that is, the subject of execution of the following processing flow is not limited to each logic unit, but may be hardware or a logic device.

In addition, an embodiment of the present application also proposes a computer-readable storage medium, configured to store one or more programs, the one or more programs including instructions.

Optionally, the instructions, when executed by a portable electronic device including a plurality of applications, can cause the portable electronic device to perform the steps of the method shown in FIG. 1, including:

acquiring a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows;
inputting the user distribution spatio-temporal sequence sample into a user distribution prediction model to obtain predicted user spatial distribution data of the target time window corresponding to the target cell;
determining training loss of the user distribution prediction model on the basis of the user spatial distribution data of the target time window with which the user distribution spatio-temporal sequence sample is labeled, and the predicted user spatial distribution data of the target time window provided by the user distribution prediction model; and
performing parameter adjustment on the user distribution prediction model on the basis of the training loss.

Or, the instructions, when executed by a portable electronic device including a plurality of applications, can cause the portable electronic device to perform the steps of the method shown in FIG. 7, including:

acquiring a user distribution spatio-temporal sequence associated with a future time window of a target cell, the user distribution spatio-temporal sequence consisting of user spatial distribution data of a plurality of continuous historical time windows;
inputting the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows;
determining a matching antenna adjustment strategy based on the predicted user spatial distribution data of the future time window corresponding to the target cell; and
performing antenna adjustment on the target cell according to the antenna adjustment strategy in the future time window.

As will be appreciated by those skilled in the art, the embodiments in this disclosure may be provided as a method, a system, or a computer program product. Thus, this disclosure may take the form of an entirely hardware embodiment, an entirely software embodiment or an embodiment combining software and hardware. Moreover, this disclosure may take the form of a computer program product implemented on one or more computer available storage media (including but not limited to a disk memory, a Compact Disc Read-Only Memory (CD-ROM), an optical memory, etc.) containing computer available program codes therein.

Specific embodiments in this disclosure are described above. Other embodiments are within the scope of the appended claims. In some cases, the actions or steps recited in the claims can be performed in a different order than in the embodiments and the desired results may still be achieved. In addition, the processes depicted in the accompanying figures do not necessarily require the particular order or sequential order shown to achieve the desired results. In certain embodiments, multitasking and parallel processing are also possible or may be advantageous.

The above are only the embodiments in this disclosure, and are not intended to limit this disclosure. For those skilled in the art, various modifications and variations can be made to this disclosure. Any modifications, equivalent replacements, improvements and the like made within the spirit and principle of this disclosure should be included within the scope of the claims of this disclosure. In addition, all other embodiments obtained by those of ordinary skill in the art without making inventive step should belong to the protection scope of this disclosure.

**Claims**

1.  A model training method, comprising:

    acquiring a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows;
    inputting the user distribution spatio-temporal sequence sample into a user distribution prediction model to obtain predicted user spatial distribution data of the target time window corresponding to the target cell;
    determining training loss of the user distribution prediction model on the basis of the user spatial distribution data of the target time window with which the user distribution spatio-temporal sequence sample is labeled, and the predicted user spatial distribution data of the target time window provided by the user distribution prediction model; and
    performing parameter adjustment on the user distribution prediction model on the basis of the training loss.

2.  The method according to claim 1, wherein acquiring a user distribution spatio-temporal sequence sample of a target cell comprises:

    acquiring a set of measurement reports for the plurality of continuous time windows corresponding to the target cell;
    gridding the target cell to determine geographical location information of each grid in the target cell;
mapping the set of measurement reports to grids which are matched with geographical locations in the target cell according to the geographical location information in the measurement reports to obtain a distribution of the measurement reports for the plurality of continuous time windows corresponding to the target cell; and
determining user spatial distribution data of each time window corresponding to the target cell based on a distribution of a measurement report for each of the plurality of continuous time windows corresponding to the target cell, and combining the user spatial distribution data of each time window in a time sequence to obtain the user distribution spatio-temporal sequence sample of the target cell.

3.  The method according to claim 1, wherein the user distribution prediction model is a convolutional long short-term memory (ConvLSTM) model or a generative adversarial network-long short-term memory (GAN-LSTM) model.

4.  The method according to claim 1, wherein determining training loss of the user distribution prediction model on the basis of the user spatial distribution data of the target time window with which the user distribution spatio-temporal sequence sample is labeled, and the predicted user spatial distribution data of the target time window provided by the user distribution prediction model comprises:
    inputting the user spatial distribution data of the target time window with which the user distribution spatio-temporal sequence sample is labeled, and the predicted user spatial distribution data of the target time window provided by the user distribution prediction model into a cross-entropy loss function for binary classification to calculate the training loss of the user distribution prediction model.

5.  A cell antenna adjustment method, comprising:

    acquiring a user distribution spatio-temporal sequence associated with a future time window of a target cell, the user distribution spatio-temporal sequence consisting of user spatial distribution data of a plurality of continuous historical time windows;
    inputting the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows;

determining a matching antenna adjustment strategy based on the predicted user spatial distribution data of the future time window corresponding to the target cell; and

performing antenna adjustment on the target cell according to the antenna adjustment strategy in the future time window.

6. The method according to claim 5, wherein determining a matching antenna adjustment strategy based on the predicted user spatial distribution data of the future time window corresponding to the target cell comprises:

acquiring user spatial distribution data of a reference time window corresponding to the target cell, the reference time window being a last historical time window of the future time window; determining a change in user distribution of the target cell based on the user spatial distribution data of the reference time window corresponding to the target cell and the predicted user spatial distribution data of the future time window corresponding to the target cell; and determining the matching antenna adjustment strategy based on the predicted user spatial distribution data of the future time window corresponding to the target cell if the change in user distribution of the target cell reaches a preset change standard.

7. The method according to claim 6, wherein determining a change in user distribution of the target cell based on the user spatial distribution data of the reference time window corresponding to the target cell and the predicted user spatial distribution data of the future time window corresponding to the target cell comprises:

performing feature vector coding on the user spatial distribution data of the reference time window corresponding to the target cell and the predicted user spatial distribution data of the future time window corresponding to the target cell to obtain a first feature vector of the reference time window corresponding to the target cell and a second feature vector of the future time window corresponding to the target cell; and determining the change in user distribution of the target cell based on a cosine distance between the first feature vector and the second feature vector.

8. The method according to claim 5, wherein the plurality of continuous historical time windows are determined based on a sliding window method matched with the number of time windows, and a last time window of the plurality of continuous historical time windows is a time window closest to a current time.

9. A model training apparatus, comprising:

a training sample acquisition module, configured to acquire a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows;

a training sample input module, configured to input the user distribution spatio-temporal sequence sample into a user distribution prediction model to obtain predicted user spatial distribution data of the target time window corresponding to the target cell;

a training loss calculation module, configured to determine training loss of the user distribution prediction model on the basis of the user spatial distribution data of the target time window with which the user distribution spatio-temporal sequence sample is labeled, and the predicted user spatial distribution data of the target time window provided by the user distribution prediction model; and

a training adjustment module, configured to perform parameter adjustment on the user distribution prediction model on the basis of the training loss.

10. A cell antenna adjustment apparatus, comprising:

a prediction preparation module, configured to acquire a user distribution spatio-temporal sequence associated with a future time window of a target cell, the user distribution spatio-temporal sequence consisting of user spatial distribution data of a plurality of continuous historical time windows;

a prediction execution module, configured to input the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows;

a strategy determination module, configured to determine a matching antenna adjustment strategy based on the predicted user spatial distribution data of the future time window corresponding to the target cell; and

a strategy execution module, configured to perform antenna adjustment on the target cell according to the antenna adjustment strategy in the future time window.

11. An electronic device, comprising:
a processor; and a memory configured to store computer-executable instructions that, when executed, cause the processor to perform the method according to any one of claims 1 to 4, or that, when executed, cause the processor to perform the method according to any one of claims 5 to 8.

12. A computer-readable storage medium, configured to store computer-executable instructions that, when executed by a processor, implement the method according to any one of claims 1 to 4, or that, when executed by a processor, implement the method according to any one of claims 5 to 8.

Acquire a user distribution spatio-temporal sequence sample of a target cell, the user distribution spatio-temporal sequence sample consisting of user spatial distribution data of a plurality of continuous time windows, the user distribution spatio-temporal sequence sample being labeled with user spatial distribution data of a target time window, and the target time window being a time window following the plurality of continuous time windows

S102

Input the user distribution spatio-temporal sequence sample into a user distribution prediction model to obtain predicted user spatial distribution data of the target time window corresponding to the target cell

S104

Determine training loss of the user distribution prediction model on the basis of the user spatial distribution data of the target time window with which the user distribution spatio-temporal sequence sample is labeled, and the predicted user spatial distribution data of the target time window provided by the user distribution prediction model

S106

Perform parameter adjustment on the user distribution prediction model on the basis of the training loss

S108

FIG. 1

Forget gate

Input gate

Output gate

FIG. 2

FIG. 3

FIG. 4

FIG. 5

FIG. 6

Acquire a user distribution spatio-temporal sequence associated with a future time window of a target cell, the user distribution spatio-temporal sequence consisting of user spatial distribution data of a plurality of continuous historical time windows — S702

Input the user distribution spatio-temporal sequence into a user distribution prediction model to obtain predicted user spatial distribution data of the future time window corresponding to the target cell, wherein the user distribution prediction model is trained based on a user distribution spatio-temporal sequence sample of the target cell, the user-distribution spatio-temporal sequence sample consists of user spatial distribution data of a plurality of continuous time windows, the user distribution spatio-temporal sequence sample is labeled with user spatial distribution data of a target time window, and the target time window is a time window following the plurality of continuous time windows — S704

Determine a matching antenna adjustment strategy based on the predicted user spatial distribution data of the future time window corresponding to the target cell — S706

Perform antenna adjustment on the target cell according to the antenna adjustment strategy in the future time window — S708

FIG. 7

800

810
Training sample acquisition module

820
Training sample input module

830
Training loss calculation module

840
Training adjustment module

FIG. 8

900

910

Prediction preparation module

920

Prediction execution module

930

Strategy determination module

940

Strategy execution module

FIG. 9

Processor

Internal bus

Network interface

Memory

Non-volatile memory

Electronic device

FIG. 10

## INTERNATIONAL SEARCH REPORT

| International application No. |
| --- |
| **PCT/CN2023/118590** |

| A. | CLASSIFICATION OF SUBJECT MATTER |
| --- | --- |
| | H04B17/391(2015.01)i |

According to International Patent Classification (IPC) or to both national classification and IPC

| B. | FIELDS SEARCHED |
| --- | --- |

Minimum documentation searched (classification system followed by classification symbols)

IPC: H04B,G06K

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 天线, 小区, 调整, 用户, 分布, 时空, 时间, 空间, 序列, 模型, 训练, 预测, 窗口, antenna, cell, adjust, user, distribution, temporal, spatial, sequence, model, train, prediction, window

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114726463 A (DATANG MOBILE COMMUNICATIONS EQUIPMENT CO., LTD. et al.) 08 July 2022 (2022-07-08) description, paragraphs 0002-0003 and 0057-0160, and figure 6 | 1-4, 9, 11-12 |
| Y | CN 114726463 A (DATANG MOBILE COMMUNICATIONS EQUIPMENT CO., LTD. et al.) 08 July 2022 (2022-07-08) description, paragraphs 0002-0003 and 0057-0160, and figure 6 | 5-8, 10 |
| Y | CN 111082840 A (CHINA UNITED NETWORK COMMUNICATIONS GROUP CO., LTD.) 28 April 2020 (2020-04-28) description, paragraphs 0035-0071 | 5-8, 10 |
| A | CN 101431758 A (HUAWEI TECHNOLOGIES CO., LTD.) 13 May 2009 (2009-05-13) entire document | 1-12 |
| A | CN 108053080 A (CHINA MOBILE GROUP JIANGSU CO., LTD. et al.) 18 May 2018 (2018-05-18) entire document | 1-12 |
| A | KR 20060027150 A (KT CORP.) 27 March 2006 (2006-03-27) entire document | 1-12 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 November 2023** | **28 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118590**

| Patent document cited in search report | | | Publication date (day/month/year) | Patent family member(s) | | | Publication date (day/month/year) |
|---|---|---|---|---|---|---|---|
| CN | 114726463 | A | 08 July 2022 | None | | | |
| CN | 111082840 | A | 28 April 2020 | None | | | |
| CN | 101431758 | A | 13 May 2009 | WO | 2010066175 | A1 | 17 June 2010 |
| CN | 108053080 | A | 18 May 2018 | None | | | |
| KR | 20060027150 | A | 27 March 2006 | None | | | |

Form PCT/ISA/210 (patent family annex) (July 2022)

**EP 4 589 865 A1**

**Patent documents cited in the description**

- CN 202211202383